# EUROPÄISCHE PATENTSCHRIFT

(11) **EP 0 627 383 B1**
(45) Veröffentlichungstag und Bekanntmachung des Hinweises auf die Patenterteilung: **07.01.1998**
(21) Anmeldenummer: 94106794.4
(22) Anmeldetag: 30.04.1994
(51) Int. Cl.: C01B 33/36, C02F 5/08

(54) **Verfahren zur Herstellung von kristallinem Natriumschichtsilikat mit Kanemitstruktur**
Process for the preparation of cristalline sodium layered silicate with a kanemit structure
Procédé de préparation de silicate de sodium en couches cristallisé de structure kanémite

(30) Priorität: 02.06.1993 DE 4318242
(43) Veröffentlichungstag der Anmeldung: 07.12.1994
(73) Patentinhaber: Clariant GmbH, 65929 Frankfurt am Main (DE)
(72) Erfinder: Tapper, Alexander, Dr., D-41239 Mönchengladbach (DE); Adrian, Renate, D-50354 Hürth (DE); Schimmel, Günther, Dr., D-50374 Erftstadt (DE)

(56) Entgegenhaltungen:
- EP-A- 0 164 514
- EP-A- 0 320 770

## Beschreibung

Die vorliegende Erfindung betrifft ein Verfahren zur Herstellung von kristallinem Natriumschichtsilikat mit Kanemitstruktur mit der chemischen Formel NaH Si₂O₅ . X H₂O, in der X für einen Wert zwischen 1 und 3 steht.

Moderne Feinwaschmittel und Geschirrspülmittel sollen einen niedrigen pH-Wert von 8 bis 1o haben und stellen Mehrstoffgemische dar, die u.a. Builder, Cobuilder, ein Bleichsystem und einen Stabilisator enthalten. Dabei werden als Builder beispielsweise Natriumtripolyphosphat oder Zeolith A, als Cobuilder Polycarboxylate, als Bleichsysteme Percarbonat oder eine Mischung von Perboraten und Tetraacetylethylendiamin (TAED) und als Stabilisatoren Phosphonate verwendet.

Aus der EP-PS 164 514 ist ein Wasch- und Reinigungsmittel bekannt, welches neben Tensiden kristalline schichtförmige Natriumsilikate der Zusammensetzung NaMSiₓO₂ₓ₊₁ . yH₂O (mit M gleich Natrium oder Wasserstoff, x von 1,9 bis 4 und y von 0 bis 2o) als Builder enthält. Dabei zeigen kristalline Natriumsilikate ein höheres Kalkbindevermögen als amorphe, was auf ihren schichtförmigen Aufbau mit erhöhtem Polymerisationsgrad zurückzuführen ist.

Bekannte kristalline Natriumsilikate kommen in der Natur vor, sie werden aber auch künstlich hergestellt, beispielsweise
Natrosilit Na₂Si₂O₅
Kanemit NaHSi₂O₅ . 3H₂O
Makatit Na₂Si₄O₉ . 3H₂O
Magadiit Na₂Si₁₄O₂₉ . 11H₂O
Kenyait Na₂Si₂₂O₄₅ . 10H₂O

Von besonderem Interesse für die Verwendung in Feinwasch- und Geschirrspülmitteln sind die sich von der Struktur des Kanemits ableitenden Natriumsilikate, da diese in der Waschflotte einen geringeren pH-Wert als das in der EP-PS 164 514 genannte, im wesentlichen aus δ-Na₂Si₂O₅ bestehende Natriumsilikat aufweisen. Zur Herstellung von Kanemit kann entweder β-Na₂Si₂O₅ oder α-Na₂Si₂O₅ mit einem Wasser-Methanol-Gemisch bei 1oo °C behandelt werden, wobei anschließend 5 bis 24 Stunden auf 7oo °C erhitzt und schließlich das Tempergut mit Wasser ausgelaugt wird.

Nachteilig ist dabei, daß diese Herstellung wegen der erforderlichen kontrollierten Zugabe der einzelnen Substanzen aufwendig ist und wegen der Brennbarkeit des Methanols erhebliche Sicherheitsvorkehrungen erfordert.

Nach einer in der EP-PS 164 514 beschriebenen Variante kann man Kanemit erhalten, wenn man δ-Na₂Si₂O₅ mit Wasser hydrolysiert, den Feststoff abfiltriert und bei 4o-1o5 °C trocknet.

Bei dieser Variante ist es von Nachteil, daß bei der Hydrolyse ein schwer filtrierbarer Feststoff anfällt und ein NaOH-Äquivalent mit dem Filtrat ausgeschleust wird.

Die EP-A-0 164 552 beschreibt ein Verfahren zur Herstellung von kristallinen Natriumsilikaten mit einem Molverhältnis SiO₂/Na₂O von 1,9 : 1 bis 3,5 : 1 aus amorphem Natriumsilikat, indem wasserhaltiges amorphes Natriumsilikat mit einem Molverhältnis SiO₂/Na₂O von 1,7 : 1 bis 3,75 : 1 und einem Wassergehalt von 5 bis 95 Gew.-% mit 0,01 bis 30 Gew.-% des herzustellenden kristallinen Natriumsilikats versetzt wird.

Die obige Reaktionsmischung wird durch Erhitzen entwässert und die dann entwässerte Reaktionsmischung solange bei einer Temperatur, die mindestens 450 °C beträgt, jedoch unter dem Schmelzpunkt liegt, gehalten, bis das Natriumsilikat kristallisiert ist.

Aufgabe der vorliegenden Erfindung ist die Angabe eines Verfahrens zur Herstellung von kristallinem Natriumschichtsilikat mit Kanemitstruktur der chemischen Formel NaHSi₂O₅ . XH₂O, in der X für einen Wert zwischen 1 und 3 steht, mit einem hohen Ca-Bindevermögen von 6o bis 1oo mg Ca/g (bezogen auf NaHSi₂O₅) und einem pH-Wert von 1o bis 11 bei einer Aufschlämmung von 1 g/1ooo ml Wasser, welches ohne Filtration arbeitet und wobei die in das Verfahren eingebrachten Natrium-Ionen im kristallinen Natriumschichtsilikat mit Kanemitstruktur verbleiben.

Die Aufgabe wird überraschend dadurch gelöst, daß man Natriumdisilikat, Kieselsäure und Wasser im molaren Verhältnis von 1 : 2 : (6-8) mischt und über einen Zeitraum von o,2 bis 1o h auf einer Temperatur von 2o bis 1oo °C hält.

Das Verfahren gemäß der Erfindung kann weiterhin wahlweise dadurch ausgestaltet sein, daß man
a) als Natriumdisilikat δ-Na₂Si₂O₅ oder ein Gemisch aus δ-Na₂Si₂O₅ und bis zu 8o Gew% amorphem Na₂Si₂O₅ . n H₂O einsetzt;
b) als Kieselsäure gefällte Kieselsäure, pyrogene Kieselsäure, Kieselsol oder Kieselgel einsetzt;
c) das Natriumdisilikat mit einer Kornfeinheit von weniger als 1ooo µm einsetzt;
d) die Kieselsäure mit einer Kornfeinheit von weniger als 2oo µm einsetzt;
e) das Umsetzungsprodukt ggfs. weitere 0,5 bis 5 h bei 50 bis 100 °C hält;
f) das kristalline Natriumschichtsilikat mit Kanemitstruktur durch eine Mahlung auf eine Kornfeinheit von weniger als 1oo µm zerkleinert.

Das erfindungsgemäß hergestellte kristalline Natriumschichtsilikat mit Kanemitstruktur kann als Waschmittel- und Reinigungsmittelgerüststoff zur Enthärtung von Wasser, das Calcium- und/oder Magnesiumionen enthält, verwendet werden.

Das erfindungsgemäß hergestellte kristalline Natriumschichtsilikat mit Kanemitstruktur kann aus
NaHSi₂O₅ . 1H₂O oder
NaHSi₂O₅ . 3H₂O bestehen.

Da der Wasserdampfpartialdruck von NaHSi₂O₅ . 3H₂O bereits bei Temperaturen von 4o-7o °C hoch ist, kann ein Teil des NaHSi₂O₅ . 3H₂O in NaHSi₂O₅ . 1H₂O umgewandelt werden. Der Wert für X stellt somit einen Wert dar, der angibt, welcher Anteil des NaHSi₂O₅ . 3H₂O bereits als NaHSi₂O₅ . 1H₂O vorliegt.

Wenn man besonderen Wert auf die wasserenthärtende Wirkung des erfindungsgemäßen kristallinen Natriumschichtsilikats mit Kanemitstruktur legt, so ist eine gute Kristallinität anzustreben. Durch eine thermische Nachbehandlung kann die Kristallinität des Natriumschichtsilikats mit Kanemitstruktur noch gesteigert werden.

Es kann als überraschend angesehen werden, daß unter den erfindungsgemäßen Herstellbedingungen auch dann kristallines Natriumschichtsilikat mit Kanemitstruktur gebildet wird, wenn bis zu 8o Gew% des kristallinen δ-Natriumdisilikats durch amorphes Natriumdisilikat in der Reaktionsmischung ersetzt werden. Die Umsetzung von Quarzmehl und δ-Na₂Si₂O₅ führt erstaunlicherweise nicht zur Bildung von kristallinem Natriumschichtsilikat mit Kanemitstruktur.

### Aufstellung der Einsatzstoffe

- 1. δ-Na₂Si₂O₅:: Wurde nach der Arbeitsweise der DE-OS 41 42 711 hergestellt und kann als SKS-6 von der Firma Hoechst AG, Frankfurt bezogen werden.
- 2. Na₂Si₂O₅ (18 % H₂O):: Amorphes Natriumdisilikat wurde von der Firma Société Française Hoechst, Paris bezogen.
- 3. Fällungskieselsäure:: Der Typ FK 32o wurde von der Firma Degussa AG, Hanau bezogen.
- 4. Kieselsäure:: Der Typ HDKP 17o wurde von der Firma Wacker-Chemie GmbH, München bezogen.
- 5. Kieselsol:: Der Typ Klebosol 1346 wurde von der Firma Société Française Hoechst, Paris bezogen.
- 6. Quarzmehl:: Der Typ Microsil 2o wurde von der Firma F. Lieben, Maastricht bezogen.

### Beispiel 1

In einem Mischer, Typ KM 7o D der Firma Lödige, Paderborn, wurden
- 3643 g: δ-Na₂Si₂O₅ (SKS-6)
- 2451 g: Fällungskieselsäure,
Trockenverlust bei 1o5 °C 6 Gew%; Glühverlust bei 1ooo °C 5 Gew%; Teilchengröße o,2 Gew% > 45 µm; SiO₂-Gehalt: 98 Gew%
- und 2522 g: Wasser
gemischt. Die Feststoffmischung wurde anschließend in einem geschlossenen Behälter 8 h bei einer Temperatur von 6o °C gehalten. Nach dem Erkalten wurde das Produkt gebrochen und gemahlen.

Das Endprodukt hatte folgende Siebanalyse:
1o % < 6,7 µm
5o % < 28,3 µm
9o % < 66,5 µm

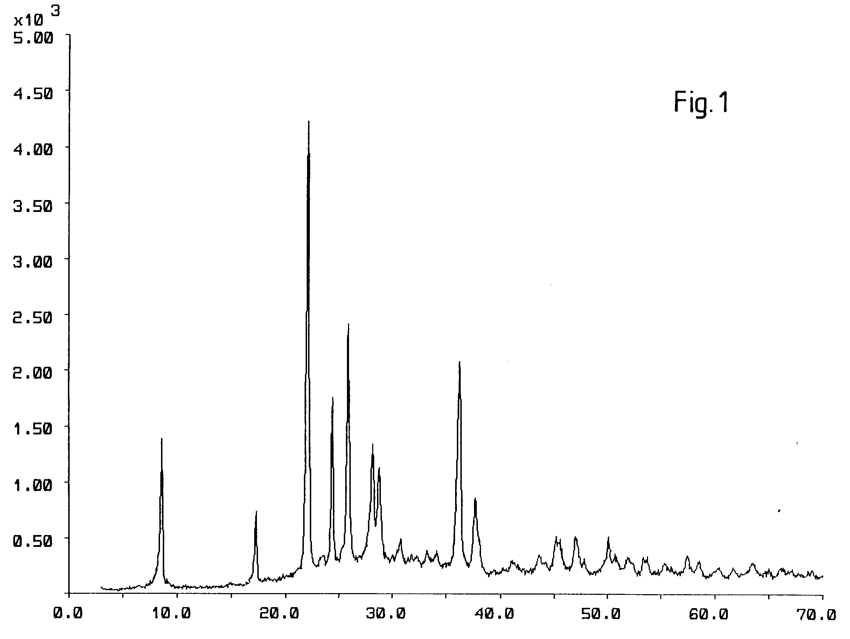

Im Röntgenbeugungsdiagramm dieses Produktes sind keine Linien des δ-Na₂Si₂O₅ mehr zu erkennen. Man beobachtet nur Kanemit-Linien (Fig. 1). Der pH-Wert der Substanz beträgt 1o,9 (1 g/l; 7 min), das Kalkbindevermögen liegt bei 75 mg Ca/g (bezogen auf NaHSi₂O₅).

### Beispiel 2

In einem Labormörser wurden
- 129 g: Kieselsäure, SiO₂-Gehalt: 98 Gew% Trockenverlust: 6 Gew%,
- 182 g: δ-Na₂Si₂O₅
- mit 13o g: Wasser
intensiv gemischt und danach in einer geschlossenen Glasflasche 2 h bei 6o °C gehalten. Nach dem Erkalten wurde das Produkt gemahlen.

Das Röntgenbeugungsdiagramm wies nur die Kanemit-Linien auf.

### Beispiel 3

In einem Labormörser wurden
- 4oo g: Kieselsol, SiO₂-Gehalt: 3o Gew%,
- 1oo g: δ-Na₂Si₂O₅
- und 1oo g: amorphes Natriumdisilikat
miteinander gemischt. Aus dieser Mischung wurden 172 g Wasser bei 6o °C verdampft. Das verbleibende Gemisch wurde 2 h in einer verschlossenen Flasche bei 6o °C gehalten und nach dem Erkalten gemörsert.

Das Röntgenbeugungsdiagramm wies nur die Kanemit-Linien auf.

### Vergleichsbeispiel

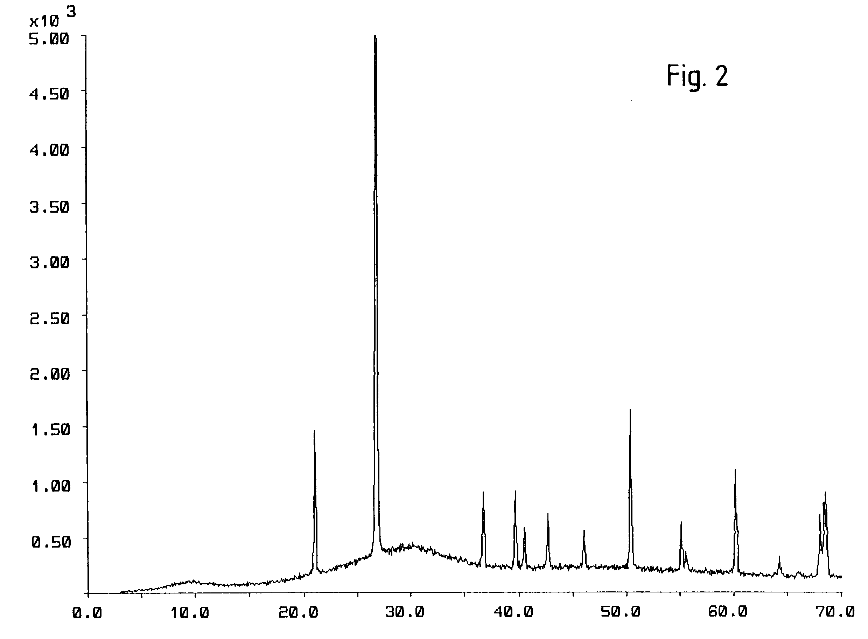

In einem Labormörser wurden
- 12o g: Quarzmehl, SiO₂-Gehalt: 99,3 Gew%, d₅₀ 4,4 µm,
- 18o g: δ-Na₂Si₂O₅
- und 13o g: Wasser
intensiv gemischt und anschließend in einer verschlossenen Flasche 8 h bei 6o °C gehalten. Es bildete sich eine klebrige Masse, deren Röntgenbeugungsdiagramm nur die Beugungslinien des Quarzes aufwies (Fig. 2).

## Patentansprüche

1. Verfahren zur Herstellung von kristallinem Natriumschichtsilikat mit Kanemitstruktur mit der chemischen Formel
NaH Si₂O₅ . X H₂O
in der X für einen Wert zwischen 1 und 3 steht, dadurch gekennzeichnet, daß man Natriumdisilikat, Kieselsäure und Wasser im molaren Verhältnis von 1 : 2 : (6 - 8) mischt und über einen Zeitraum von o,2 bis 1o h auf einer Temperatur von 2o bis 1oo °C hält.

2. Verfahren nach Anspruch 1, dadurch gekennzeichnet, daß man als Natriumdisilikat δ-Na₂Si₂O₅ oder ein Gemisch aus δ-Na₂Si₂O₅ und bis zu 8o Gew% amorphem Na₂Si₂O₅ . n H₂O einsetzt.

3. Verfahren nach Anspruch 1 und 2, dadurch gekennzeichnet, daß man als Kieselsäure gefällte Kieselsäure, pyrogene Kieselsäure, Kieselsol oder Kieselgel einsetzt.

4. Verfahren nach einem der Ansprüche 1 bis 3, dadurch gekennzeichnet, daß man das Natriumdisilikat mit einer Kornfeinheit von weniger als 1ooo µm einsetzt.

5. Verfahren nach einem der Ansprüche 1 bis 4, dadurch gekennzeichnet, daß man die Kieselsäure mit einer Kornfeinheit von weniger als 2oo µm einsetzt.

6. Verfahren nach einem der Ansprüche 1 bis 5, dadurch gekennzeichnet, daß man das Umsetzungsprodukt ggfs. weitere o,5 bis 5 h bei 5o bis 1oo °C hält.

7. Verfahren nach einem der Ansprüche 1 bis 6, dadurch gekennzeichnet, daß man das kristalline Natriumschichtsilikat mit Kanemitstruktur durch eine Mahlung auf eine Kornfeinheit von weniger als 1oo µm zerkleinert.

## Claims

1. A process for the production of crystalline sodium sheet silicate with kanemite structure with the chemical formula
NaH Si₂O₅ · X H₂O
in which X represents a value between 1 and 3, which comprises sodium disilicate, silica and water being mixed in the molar ratio of 1 : 2 : (6 - 8) and maintained at a temperature of 20 to 100°C for a period of 0.2 to 10 h.

2. The process as claimed in claim 1, wherein δ-Na₂Si₂O₅ or a mixture of δ-Na₂Si₂O₅ and up to 80% by weight of amorphous Na₂Si₂O₅ · n H₂O is employed as sodium disilicate.

3. The process as claimed in claim 1 and 2, wherein precipitated silica, pyrogenic silica, silica sol or silica gel is employed as silica.

4. The process as claimed in any one of claims 1 to 3, wherein the sodium disilicate is employed with a particle fineness of less than 1000 µm.

5. The process as claimed in any one of claims 1 to 4, wherein the silica is employed with a particle fineness of less than 200 µm.

6. The process as claimed in any one of claims 1 to 5, wherein the reaction product is maintained at 50 to 100°C optionally for a further 0.5 to 5 h.

7. The process as claimed in any one of claims 1 to 6, wherein the crystalline sodium sheet silicate with kanemite structure is comminuted by milling to a particle fineness of less than 100 µm.

## Revendications

1. Procédé de préparation de silicate stratiforme de sodium cristallin à structure de type kanemite de formule chimique
NaH Si₂O₅ . X H₂O
où X représente une valeur comprise entre 1 et 3, caractérisé en ce qu'on mélange du disilicate de sodium, de l'acide silicique et de l'eau dans un rapport molaire de 1:2:(6 à 8) et qu'on le maintient pendant une durée de 0,2 à 10 h à une température de 20 à 100°C.

2. Procédé selon la revendication 1, caractérisé en ce qu'on utilise comme disilicate de sodium δ-Na₂Si₂O₅ ou un mélange de δ-Na₂Si₂O et de Na₂Si₂O₅ . n H₂O amorphe jusqu'à 80 % en poids.

3. Procédé selon les revendications 1 et 2, caractérisé en ce qu'on utilise comme acide silicique de l'acide silicique précipité, de l'acide silicique pyrogène, un sol de silice ou un gel de silice.

4. Procédé selon une des revendications 1 à 3, caractérisé en ce qu'on utilise le disilicate de sodium ayant une finesse de grain inférieure à 1 000 µm.

5. Procédé selon une des revendications 1 à 4, caractérisé en ce qu'on utilise l'acide silicique ayant une finesse de grain inférieure à 200 µm.

6. Procédé selon une des revendications 1 à 5, caractérisé en ce qu'on maintient le produit réactionnel le cas échéant pendant 0,5 à 5 h supplémentaires entre 50 et 100°C.

7. Procédé selon une des revendications 1 à 6, caractérisé en ce qu'on réduit le silicate stratiforme de sodium cristallin à structure de type kanemite par broyage à une finesse de grain inférieure à 100 µm.
